# EUROPÄISCHE PATENTSCHRIFT

(11) **EP 3 822 200 B1**
(45) Veröffentlichungstag und Bekanntmachung des Hinweises auf die Patenterteilung: **27.08.2025**
(21) Anmeldenummer: 20181127.0
(22) Anmeldetag: 19.06.2020
(51) Int. Cl.: B65G 47/57, B08B 9/44

(54) **SYNCHRONISATION DER BEHÄLTER ZU- UND ABGABEVORRICHTUNG**
SYNCHRONIZATION OF CONTAINER FEED AND DISPENSING DEVICE
SYNCHRONISATION DU RÉCIPIENT D'UN DISPOSITIF DE RÉCEPTION ET DE DISTRIBUTION

(30) Priorität: 12.11.2019 DE 102019130414
(43) Veröffentlichungstag der Anmeldung: 19.05.2021
(73) Patentinhaber: Krones AG, 93073 Neutraubling (DE)
(72) Erfinder: Kornprobst, Stefan, 93073 Neutraubling (DE); Fuchs, Florian, 93073 Neutraubling (DE); Mayer, Christoph, 93073 Neutraubling (DE); Koch, Uwe, 93073 Neutraubling (DE); Davidson, Hartmut, 93073 Neutraubling (DE); Hansen, Denny, 93073 Neutraubling (DE)
(74) Vertreter: Grünecker Patent- und Rechtsanwälte PartG mbB

(56) Entgegenhaltungen:
- EP-A1- 3 401 028
- GB-A- 1 000 027
- NL-C- 128 138

## Beschreibung

### Stand der Technik

Die Erfindung betrifft eine Behälterbehandlungseinheit der im Oberbegriff des Patentanspruchs 1 angegebenen Art, sowie ein Verfahren zur Zufuhr und/oder Abfuhr von Behältern.

Behandlungseinheiten für Behälter können unter anderem Transportsysteme für Behälter aufweisen, wobei die Transportsysteme beispielsweise endlos umlaufende Transportelemente umfassen können. Diese endlos umlaufenden Transportelemente sind häufig als Ketten, Bänder oder Riemen ausgeführt an denen Halterungen für Behälter, z.B. Zellen oder Körbe, angeordnet sind zum Transport der Behälter innerhalb der Behandlungseinheit, beispielsweise eine Behälterreinigungsmaschine. Eine gattunsgemäße Behälterbehandlungseinheit ist aus der NL 128 138 C bekannt, wobei die Mittel zum Zufuhr von Behältern synchron mit dem umlaufenden Transportelement bewegbar sind.

Besagte endlos umlaufende Transportelemente sind dabei oft sehr anfällig für Materialverschleiß, Verschmutzung oder Änderungen in den Umweltbedingungen, wie z.B. Temperatur oder Feuchtigkeit, was zur Folge haben kann, dass sich die Eigenschaften der Transportelemente in unerwünschter Weise ändern können. Beispielsweise können sich Ketten der Transportelemente durch Längung oder Verschleiß verziehen, so dass sich die Geometrie und Lage der Transportelemente in unerwünschter Weise ändern kann.

Dies kann dazu führen, dass die Zufuhr und Abfuhr von Behältern zu und von Transportelemente der Behandlungseinheit gestört werden kann und Behälter nicht ordnungsgemäß an die Behandlungseinheit übergeben werden können bzw. nicht ordnungsgemäß aus der Behandlungseinheit entnommen / abgeführt werden können.

Dies kann schließlich dazu führen, dass es vermehrt zu Störungen im Betriebsablauf der Behandlungseinheit bzw. der Produktion kommen kann, insbesondere zu Maschinenstillständen und erhöhtem Maschinenverschleiß, sowie vermehrt zu Behälter-und Maschinenschäden.

### Aufgabe

Es ist somit Aufgabe der Erfindung Mittel und Verfahren bereitzustellen, die Zufuhr von Behältern zu einer Behälterbehandlungseinheit und/oder die Abnahme von Behältern aus einer Behälterbehandlungseinheit zu verbessern, insbesondere beispielsweise hinsichtlich der Genauigkeit und Zuverlässigkeit mit der Behälter der Behälterbehandlungseinheit zugeführt werden können bzw. hinsichtlich der Genauigkeit und Zuverlässigkeit mit der Behälter von der Behälterbehandlungseinheit abgeführt werden können.

### Lösung

Dies wird erfindungsgemäß durch den Gegenstand der unabhängigen Ansprüche erreicht. Vorteilhafte Ausführungsformen und Weiterbildungen sind Gegenstand der Unteransprüche.

Eine Vorrichtung zur Zufuhr von Behältern, z.B. Flaschen, zu Zellen von Behälterreihen eines umlaufenden Transportelementes einer Behälterbehandlungseinheit, z.B. Behälterreinigungseinheit, und/oder zur Abnahme von Behältern aus Zellen von Behälterreihen eines/des umlaufenden Transportelementes einer/der Behälterbehandlungseinheit umfasst dabei folgende Komponenten.
- eine Messsensorik die dazu konfiguriert ist, eine Ausrichtung und/oder Position der Behälterreihen des Transportelementes der Behälterbehandlungseinheit zu messen,
- Mittel zur Zufuhr von Behältern zu Zellen von Behälterreihen der Behälterbehandlungseinheit und/oder Mittel zur Abnahme von Behältern aus Zellen von Behälterreihen der Behälterbehandlungseinheit, wobei
- die Mittel zur Zufuhr und/oder die Mittel zur Abfuhr der Behälter verstellbar sind und wobei die Verstellung der Mittel zur Zufuhr und/oder Abfuhr der Behälter auf Grundlage der von der Messsensorik gemessenen Ausrichtung und/oder Position der Behälterreihen des Transportelementes erfolgt.

Unter einem umlaufenden Transportelement einer Behälterbehandlungseinheit kann dabei beispielsweise ein endlos umlaufendes Transportelement verstanden werden, welche Ketten, Bänder oder Riemen umfassen kann.

Die Behälterbehandlungseinheit kann dabei beispielsweise eine Behälterwaschmaschine bzw. eine Flaschenwaschmaschine sein.

Unter Zellen können Halterungen zur Aufnahme und zum Transport von Behältern, beispielsweise Flaschen, verstanden werden, wobei z.B. eine Zelle jeweils einen Behälter aufnehmen kann.

Besagte beispielhafte Zellen, auch als Flaschenzellen oder Behälterzellen bezeichenbar, können dabei korbähnlich geformt sein, wobei beispielsweise die Zellenform zudem der Kontur der zu transportierenden Behälter entsprechend angepasst ist. Die Zellen können dabei beispielsweise aus einem Material beschaffen sein, welches unter anderem Metall, z.B. Stahl oder Edelstahl, oder Kunststoff oder eine Kombination genannter Materialien, z.B. Zellenkörper aus Stahl/Edelstahl mit Kunststoffmündung, umfassen kann.

Unter Zellen von Behälterreihen eines umlaufenden Transportelementes können dabei in einer Reihe entlang des Transportelementes angeordnete Zellen verstanden werden, sodass eine Reihe von Behälter durch eine Reihe von Zellen aufgenommen und transportiert werden kann und nach Transport die Reihe der Behälter aus den Zellen wieder entnommen werden kann.

Eine beispielhafte Behälterreihe kann also eine Reihe von Zellen zur Halterung und zum Transport von Behältern aufweisen.

Besagte beispielhafte Behälterreihen bzw. Zellenreihen können dabei insbesondere senkrecht bzw. orthogonal zur Transportrichtung des Transportelementes angeordnet sein.

Darüber hinaus kann das beispielhafte Transportelement eine Vielzahl von Behälterreihen bzw. Zellenreihen aufweisen, welche parallel zueinander und mit festgelegten Abständen entlang des Transportelement angeordnet sein können.

Besagte beispielhafte Behälterreihen können unter anderem als Aufnahmeleisten mit Zellen zur Aufnahme der Behälter ausgeführt sein, wobei die beispielhaften Behälterreihen bzw. Aufnahmeleisten an den umlaufenden Transportelementen einer Behälterbehandlungseinheit, angeordnet bzw. befestigt sein können. So können besagte beispielhafte Behälterreihen bzw. Aufnahmeleisten z.B. an als Ketten ausgeführten umlaufenden Transportelementen befestigt sein.

Unter dem Messen einer Ausrichtung und/oder Position der Behälterreihen des Transportelementes der Behälterbehandlungseinheit kann insbesondere das Messen der Lage der Behälterreihen des Transportelementes, beispielsweise in Bezug auf eine Referenzlage, z.B. eine horizontale Referenzlage, und/der ein Messen von Abständen zwischen Behälterreihen des Transportelementes der Behälterbehandlungseinheit.

Unter Mitteln zur Zufuhr von Behältern zu Zellen von Behälterreihen der Behälterbehandlungseinheit und/oder unter Mitteln zur Abnahme von Behältern aus Zellen von Behälterreihen der Behälterbehandlungseinheit können insbesondere mechanische bzw. elektromechanische Mittel verstanden werden.

Beispielsweise können besagte Mittel zur Zufuhr von Behältern zu Zellen von Behälterreihen der Behälterbehandlungseinheit, auch als Einschub bzw. Einschubmittel benennbar, und/oder besagte Mittel zur Abnahme von Behältern aus Zellen von Behälterreihen, auch als Ausschub bzw. Ausschubmittel benennbar, schienenförmig und/oder rollenförmig ausgeführt sein, sowie beispielsweise bewegliche Schieberelemente und/oder Schaufelelemente als Antriebsmittel zur Bewegung der Behälter aufweisen.

Beispielsweise können die Mittel zur Zufuhr und/oder die Mittel zur Abfuhr der Behälter Führungsprofile mit beweglichen und verstellbare Schienenelemente zur Führung und zum Transport der Behälter umfassen.

Dabei kann beispielsweise die Ausrichtung der Führungsprofile bzw. die Ausrichtung der Schienenelemente zur Führung und zum Transport der Behälter auf Grundlage der von der Messsensorik gemessenen Ausrichtung der Behälterreihen des Transportelementes verstellt werden, beispielsweise verkippt werden.

Anders ausgedrückt können die durch die Messsensorik bestimmten Daten zur Ausrichtung bzw. Lage und/oder Position der Behälterreihen des Transportelementes der Behälterbehandlungseinheit als Referenz dienen auf deren Grundlage der Einschub und/oder Ausschub bzw. die Einschubmittel und/oder Ausschubmittel bzw. die Mittel zur Zufuhr von Behältern zu/hinein in Zellen von Behälterreihen bzw. die Mittel zur Abfuhr/Abnahme von Behältern heraus aus Zellen von Behälterreihen verstellt/angepasst, z.B. verkippt und/oder höhenverstellt, werden können.

Beispielsweise können besagte Mittel zur Zufuhr von Behältern zu Zellen von Behälterreihen der Behälterbehandlungseinheit und/oder besagte Mittel zur Abnahme von Behältern aus Zellen von Behälterreihen beispielsweise so ausgeführt sein, dass Behälter durch Schieberelemente und/oder Schaufelelemente entlang einem Führungsprofil, z.B. Führungsschienen oder Führungsleisten, bewegt werden können zur Übergabe an Zellen von Behälterreihen der Behälterbehandlungseinheit bzw. zur Abnahme von Behältern aus Zellen der Behälterbehandlungseinheit.

Dabei können beispielsweise besagte angetriebene/antreibbare Schieberelemente und/oder Schaufelelemente in einen Spalt des Führungsprofils, bzw. in einen Spalt einer Führungsschiene oder Führungsleiste, eingreifen, um die Behälter bewegen zu können, d.h. um die Behälter entlang des Führungsprofils verschieben zu können.

Besagte beispielhafte Mittel zur Zufuhr und/oder die Mittel zur Abfuhr der Behälter können verstellbar bzw. justierbar sein.

Die Verstellung der Mittel zur Zufuhr und/oder Abfuhr der Behälter erfolgt auf Grundlage der von der Messsensorik gemessenen Ausrichtung und/oder Position der Behälterreihen des Transportelementes.

Die Verstellung der Mittel zur Zufuhr und/oder Abfuhr der Behälter auf Grundlage der von der Messsensorik gemessenen Ausrichtung und/oder Position der Behälterreihen des Transportelementes kann dabei beispielsweise Verstellungen von Führungsmitteln d.h. Verstellungen eines Führungsprofils, z.B. Führungsschienen oder Führungsleisten, und/oder Verstellungen von Antriebsmittel, z.B. über Servomotoren angetriebene/antreibbare Schieberelemente und/oder Schaufelelemente, der Vorrichtung zur Zufuhr von Behältern zu Zellen von Behälterreihen eines umlaufenden Transportelementes einer Behälterbehandlungseinheit und/oder zur Abnahme von Behältern aus Zellen von Behälterreihen umfassen.

Mit anderen Worten können die Mittel zur Zufuhr und/oder die Mittel zur Abfuhr der Behälter also ein bewegliches und verstellbares Führungsprofil zur Führung und zum Transport der Behälter umfassen, und die beispielhafte Vorrichtung kann dazu konfiguriert sein, die Ausrichtung des Führungsprofils zur Führung und zum Transport der Behälter auf Grundlage der von der Messsensorik gemessenen Ausrichtung der Behälterreihen des Transportelementes zu verstellen, wobei das Verstellen ein Verkippen entlang einer Längsachse der Vorrichtung zur Zufuhr und/oder Abnahme von Behältern an/von Behälterreihen eines umlaufenden Transportelementes einer Behälterbehandlungseinheit umfasst.

Darüber hinaus kann die Vorrichtung dazu konfiguriert ist, Bewegungen der Mittel zur Zufuhr und/oder Abfuhr der Behälter auf Grundlage der von der Messsensorik gemessenen Ausrichtung und/oder Position der Behälterreihen des Transportelementes zu beschleunigen und/oder zu verzögern.

Unter einer Verstellung der Mittel zur Zufuhr und/oder Abfuhr der Behälter auf Grundlage der von der Messsensorik gemessenen Ausrichtung und/oder Position der Behälterreihen des Transportelementes kann also sowohl eine Verstellung der räumlichen Lage als auch eine Änderung der Bewegung bzw. der Bewegungsgeschwindigkeit von Antriebsmitteln der Mittel zur Zufuhr und/oder Abfuhr der Behälter verstanden werden.

Beispielsweise können unter anderem Bewegungen der Mittel zur Zufuhr und/oder Abfuhr der Behälter beschleunigt oder verzögert werden in Abhängigkeit der von der Messsensorik gemessenen Ausrichtung und/oder Position der Behälterreihen des Transportelementes, so dass beispielsweise Positionsfehler und Variationen in den Abständen der Behälterreihen, d.h. Variationen in Teilungsabständen der Behälterreihen, ausgeglichen werden können.

Mit anderen Worten können bei durch die Messsensorik festgestellten unterschiedlichen Teilungsabständen der Behälterreihen, die Bewegung bzw. die Teilbewegungen der Mittel zur Zufuhr und/oder Abfuhr der Behälter beschleunigt oder verzögert werden.

Wird beispielsweise von der Messsensorik zudem eine Schrägstellung der Behälterreihen detektiert, können die Mittel zur Zufuhr und/oder Abfuhr der Behälter, beispielsweise das Führungsprofil entsprechend verstellt werden, also z.B. ebenfalls schräg gestellt werden, um die Schrägstellung der Behälterreihen auszugleichen.

Durch die mögliche Verstellung und das mögliche dynamische Korrigieren der Bewegung und Lage der Mittel zur Zufuhr und/oder Abfuhr der Behälter, d.h. des Einschubs bzw. Ausschubs, in Abhängigkeit der von der Messsensorik bestimmten Abstände der Behälterreihen und deren Lage und Position, lassen sich Positions- und Lagefehler der Behälterreichen korrigieren.

Die beispielhaften Antriebsmittel der Einschubmittel und/oder der Ausschubmittel können dabei unabhängig voneinander auf Grundlage der Daten der Messsensorik gesteuert werden.

Dies kann die Genauigkeit und Flexibilität der Korrigier- und Nachstellmöglichkeiten der Einschubmittel und/oder der Ausschubmittel in Abhängigkeit der von der Messsensorik bestimmten Abstände der Behälterreihen und deren Lage und Position verbessern.

Durch die hierein beschriebenen Mittel, Vorrichtungen und Verfahren zur Zufuhr von Behältern zu Zellen von Behälterreihen eines umlaufenden Transportelementes einer Behälterbehandlungseinheit und/oder zur Abnahme von Behältern aus Zellen von Behälterreihen eines/des umlaufenden Transportelementes einer/der Behälterbehandlungseinheit kann eine optimierte Übergabe von Behälter an die Behälterbehandlungseinheit bzw. eine optimierte Abnahme von Behälter aus der Behälterbehandlungseinheit gewährleistet werden unabhängig von möglichen Verschleiß oder anderweitig bedingten Änderungen der Lage, Ausrichtung, Länge oder Geometrie der Behälterreihen eines umlaufenden Transportelementes einer Behälterbehandlungseinheit.

Durch die Möglichkeit der Verstellbarkeit der Einschubmittel und/oder der Ausschubmittel, kann also ein reibungsloser und effizienter Betriebsablauf ermöglicht werden, Maschinenstillstände reduziert werden und das Risiko von Beschädigungen an den Behältern und von über den normalen Materialverschleiß hinausgehenden Schäden an der Behälterbehandlungseinheit minimiert werden.

In der Praxis hat sich überraschenderweise gezeigt, dass die Verstellung der Einschubmittel und/oder der Ausschubmittel in Abhängigkeit der von der Messsensorik gemessenen Ausrichtung und/oder Position der Behälterreihen des Transportelementes deutlich einfacher, praktischer, weniger Energieverbrauchend und vor allem effektiver ist, als beispielsweise der Versuch die Transportelemente bzw. die Antriebsmittel der Transportelemente einer Behälterbehandlungseinheit zu verstellen.

Auch kann vorteilhafter Weise eine Schrägstellung der Behälterreihen eines umlaufenden Transportelementes einer Behälterbehandlungseinheit durch die besagte beispielhafte Messsensorik erkannt werden und durch die Verstellbarkeit der Einschubmittel bzw. der Ausschubmittel ausgeglichen werden in Abhängigkeit der von der Messsensorik gemessenen Daten.

Die Daten der beispielhaften Messsensorik können darüber hinaus nicht nur im laufenden Betrieb zum Nachjustieren bzw. zur Korrektur der Einschubmittel bzw. der Ausschubmittel verwendet werden, sondern beispielsweise auch zum automatischen erstmaligen Synchronisieren des Einschubs / der Einschubmittel und des Ausschubs / der Ausschubmittel zum/mit dem umlaufenden Transportelement einer/der Behälterbehandlungseinheit. Dies kann Inbetriebnahmezeit sparen und weitere Fehlermöglichkeiten reduzieren.

Eine beispielhafte Verstellung der räumlichen Lage der Mittel zur Zufuhr von Behältern zu Zellen von Behälterreihen der Behälterbehandlungseinheit und/oder der Mittel zur Abnahme von Behältern aus Zellen von Behälterreihen der Behälterbehandlungseinheit, kann dabei beispielsweise eine Verstellung der Neigung einer Längsachse der Mittel zur Zufuhr bzw. zur Abnahme der Behälter sein, wobei die Längsachse der Mittel zur Zufuhr bzw. zur Abnahme der Behälter in einer Ebene liegen kann, welche parallel oder nicht parallel zu der Ebene sein kann in welcher eine Behälterreihe der Behälterbehandlungseinheit liegen kann.

Beispielsweise können die Mittel zur Zufuhr von Behältern zu Zellen von Behälterreihen der Behälterbehandlungseinheit, d.h. die Einschubmittel, und/oder die Mittel zur Abnahme von Behältern aus Zellen von Behälterreihen der Behälterbehandlungseinheit, d.h. die Ausschubmittel, sowie insbesondere die Vorrichtung selbst, entlang der gesamten Breite einer Behälterbehandlungseinheit, d.h. entlang der Breite bzw. Länge einer Behälterreihe, verkippt werden, beispielsweise um bis zu 15 mm oder mehr.

Diese beispielhafte Verkippungsverstellung der Vorrichtung bzw. der Mittel zur Zufuhr und/oder Abfuhr der Behälter auf Grundlage der von der Messsensorik gemessenen Ausrichtung und/oder Position der Behälterreihen des Transportelementes kann dabei zudem beispielsweise Verkippungen von Führungsmitteln d.h. Verkippungen eines Führungsprofils, z.B. Führungsschienen oder Führungsleisten, und/oder Verkippungen von Antriebsmittel, z.B. über Servomotoren angetriebene/antreibbare Schieberelemente und/oder Schaufelelemente, der Vorrichtung zur Zufuhr von Behältern zu Zellen von Behälterreihen eines umlaufenden Transportelementes einer Behälterbehandlungseinheit und/oder zur Abnahme von Behältern aus Zellen von Behälterreihen umfassen.

Unter einer Verstellung oder Verkippung eines Führungsprofils kann dabei insbesondere eine Verstellung bzw. Verkippung des gesamten Führungsprofils entlang der gesamten Breite einer Behälterbehandlungseinheit, d.h. entlang der Breite bzw. Länge einer Behälterreihe, verstanden werden, beispielsweise eine Verkippung um bis zu 15 mm oder mehr über die Breite bzw. Länge einer Behälterreihe.

Die hierin beschriebene beispielhafte Vorrichtung ist dazu konfiguriert sein, eine Verstellung der Mittel zur Zufuhr und/oder Abfuhr der Behälter auf Grundlage der von der Messsensorik gemessenen Ausrichtung und/oder Position der Behälterreihen des Transportelementes durchzuführen, welche eine Verkippung der Mittel in Bezug auf eine/die Längsachse der Vorrichtung umfasst.

Zur beispielhaften Verstellung, beispielsweise insbesondere für eine beispielhafte Verkippung, kann die hierin beschriebene Vorrichtung zur Zufuhr von Behältern zu Zellen von Behälterreihen eines umlaufenden Transportelementes einer Behälterbehandlungseinheit und/oder zur Abnahme von Behältern aus Zellen von Behälterreihen eines/des umlaufenden Transportelementes einer/der Behälterbehandlungseinheit eine Aktorik umfassend, z.B. umfassend wenigstens zwei Linearaktuatoren.

Besagte beispielhafte Aktorik kann dazu konfiguriert ist, die Ausrichtung der Mittel zur Zufuhr und/oder Abfuhr der Behälter auf Grundlage der von der Messsensorik gemessenen Ausrichtung und/oder Position der Behälterreihen des Transportelementes zu verstellen.

Besagte beispielhafte Messsensorik kann insbesondere dazu konfiguriert sein, die horizontale Ausrichtung der Behälterreihen des Transportelementes der Behälterbehandlungseinheit zu messen und/oder einen Abstand zwischen Behälterreihen des Transportelementes bestimmen zu können.

Die beispielhafte Messsensorik kann dabei wenigstens zwei Sensoren umfassen, welche beispielsweise an oder bei sich gegenüberliegenden Enden einer Behälterreihe eines umlaufenden Transportelementes bzw. über die Breite der Behälterbehandlungseinheit angeordnet sein können.

Die beispielhafte Messsensorik bzw. die beispielhaften Sensoren können dabei beispielsweise an einem Rahmen oder einer Halterung der Vorrichtung zur Zufuhr von Behältern zu Zellen von Behälterreihen eines umlaufenden Transportelementes einer Behälterbehandlungseinheit und/oder zur Abnahme von Behältern aus Zellen von Behälterreihen eines/des umlaufenden Transportelementes einer/der Behälterbehandlungseinheit angeordnet sein, wobei die Messsensorik bzw. die Sensoren entkoppelt sein können von Verstellbewegungen, z.B. Kippbewegungen, der Vorrichtung.

Alternativ oder zusätzlich kann die beispielhafte Messsensorik bzw. können die beispielhaften Sensoren beispielsweise an der Behälterbehandlungseinheit peripher über die Breite der Behälterbehandlungseinheit bzw. über die Breite einer Behälterreihe eines umlaufenden Transportelementes angeordnet sein.

Die beispielhafte Messsensorik kann dabei optische und/oder mechanische und/oder elektrische und/oder optoelektrische Sensoren umfassen.

Insbesondere kann beispielsweise die Messsensorik Sensoren umfassen, die als Initiatoren, beispielsweise als Näherungsinitiatoren oder Näherungsschalter, ausgeführt sein können, welche kontaktlos bzw. berührungsfrei die Position und/oder Lage und/oder Ausrichtung von Komponenten einer/der Behälterbehandlungseinheit ermitteln können, um so beispielsweise eine Schrägstellung (z.B. in Bezug auf eine Normalstellung, z.B. horizontale Stellung) eines umlaufenden Transportelementes einer/der Behälterbehandlungseinheit erfassen zu können.

Beispielsweise können die Sensoren der Messsensorik dabei an den Enden einer/der Behälterbehandlungseinheit angeordnet sein, z.B. links und rechts entlang der Breite einer/der Behälterbehandlungseinheit bzw. an den Enden, z.B. links und rechts, von umlaufenden Transportelementen, z.B. einer Transportkette, einer/der Behälterbehandlungseinheit.

So können beispielsweise die Position und/oder Lage und/oder Ausrichtung von an den beispielhaften Transportelementen angeordneten Behälterreihen bzw. Zellen zur Aufnahme zum Transport von Behältern erfasst werden, um als Grundlage zur Verstellung der Mittel zur Zufuhr der Behälter hinein in Zellen einer Behälterreihe bzw. zur Verstellung der Mittel zur Abfuhr/Entnahme der Behälter heraus aus Zellen einer Behälterreihe einer/der Behälterbehandlungseinheit.

Eine beispielhafte erfindungsgemäße Behälterbehandlungseinheit, beispielsweise eine Behälterwaschmaschine oder Flaschenwaschmaschine, eine hierin beispielhaft beschriebene Vorrichtung zur Zufuhr von Behältern zu Zellen von Behälterreihen eines umlaufenden Transportelementes einer Behälterbehandlungseinheit und/oder zur Abnahme von Behältern aus Zellen von Behälterreihen eines/des umlaufenden Transportelementes einer/der Behälterbehandlungseinheit umfassen.

Wie erwähnt, können die beispielhaften Antriebsmittel der Einschubmittel und/oder der Ausschubmittel können unabhängig voneinander auf Grundlage der Daten der Messsensorik gesteuert werden.

Eine beispielhafte erfindungsgemäße Behälterbehandlungseinheit kann also getrennte Antriebsysteme, z.B. Servotechnikantriebe, für Zufuhr, Abnahme und Transport der Behälter, sowie wenigstens eine überlagerte Steuerung aufweisen zur Steuerung der Antriebsysteme und zur Betriebsablaufsteuerung und Synchronizitätsüberwachung der Behälterbehandlungseinheit.

Unter einer überlagerten Steuerung kann dabei eine Steuerung mit digitaler Prozessortechnik verstanden werden, welche in Abhängigkeit der Daten der Messsensorik, sowohl die Mittel zur Zufuhr von Behältern zu Zellen von Behälterreihen der Behälterbehandlungseinheit und/oder Mittel zur Abnahme von Behältern aus Zellen von Behälterreihen der Behälterbehandlungseinheit steuern kann, einschließlich der Steuerung der Verstellung und/oder Bewegung der Einschub- und Ausschubmittel und einschließlich der Bewegung des umlaufenden Transportelementes der Behälterbehandlungseinheit.

Ein Verfahren zur Zufuhr von Behältern zu Zellen von Behälterreihen eines umlaufenden Transportelementes einer Behälterbehandlungseinheit und/oder zur Abnahme von Behältern aus Zellen von Behälterreihen eines/des umlaufenden Transportelementes einer/der Behälterbehandlungseinheit umfasst folgende Schritte:
- eine Messung einer Ausrichtung und/oder Position der Behälterreihen des Transportelementes der Behälterbehandlungseinheit mittels einer Messsensorik, und
- eine Verstellung der Mittel zur Zufuhr und/oder Abfuhr der Behälter auf Grundlage der von der Messsensorik gemessenen Ausrichtung und/oder Position der Behälterreihen des Transportelementes, wobei die Verstellung der Mittel zur Zufuhr und/oder Abfuhr der Behälter auf Grundlage der von der Messsensorik gemessenen Ausrichtung und/oder Position der Behälterreihen des Transportelementes erfolgt und eine Verkippung der Mittel in Bezug auf eine Längsachse der Vorrichtung umfasst.

Folgende Figuren stellen beispielhaft dar:

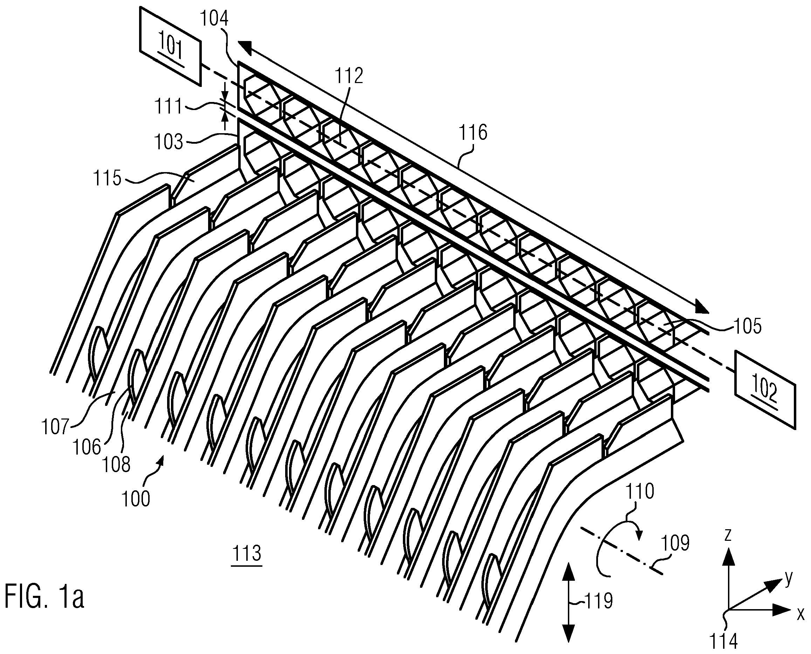

- **Fig. 1a:**: Beispielhafte Vorrichtung zur Zufuhr von Behältern zu Zellen von Behälterreihen eines umlaufenden Transportelementes einer Behälterbehandlungseinheit

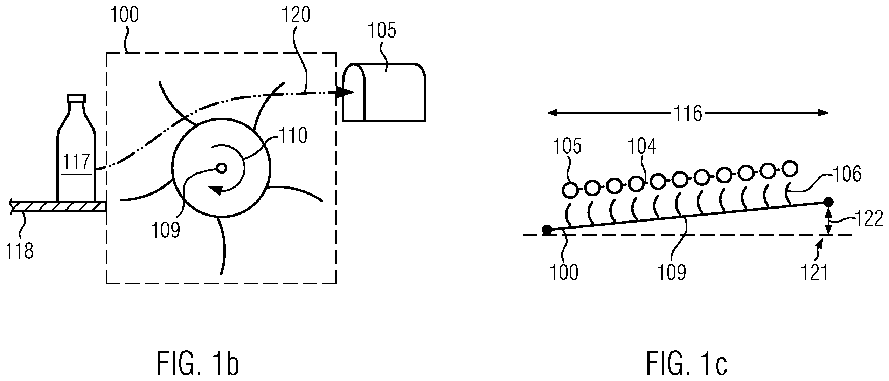

- **Fig. 1b:**: Beispielhafte schematisch vereinfachter Querschnitt einer Vorrichtung zur Zufuhr von Behältern zu Zellen von Behälterreihen eines umlaufenden Transportelementes einer Behälterbehandlungseinheit
- **Fig. 1c:**: Beispielhafte Verstellung, beispielhafte Verkippung einer beispielhaften Vorrichtung zur Zufuhr von Behältern zu Zellen von Behälterreihen eines umlaufenden Transportelementes einer Behälterbehandlungseinheit

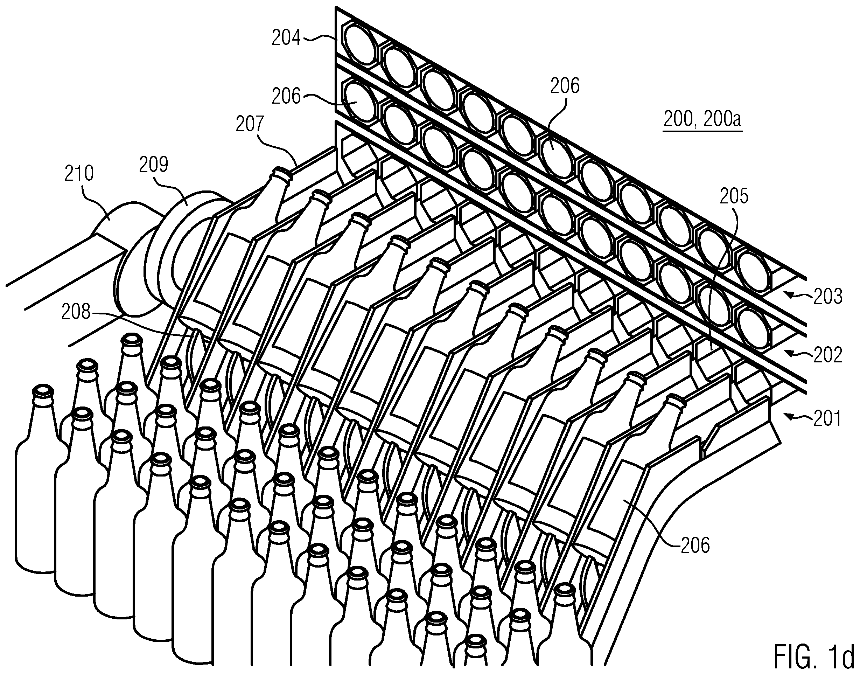

- **Fig. 1d:**: Beispielhafte Vorrichtung zur Zufuhr von Behältern zu Zellen von Behälterreihen eines umlaufenden Transportelementes einer Behälterbehandlungseinheit in einer beispielhaften (ersten) Momentaufnahme

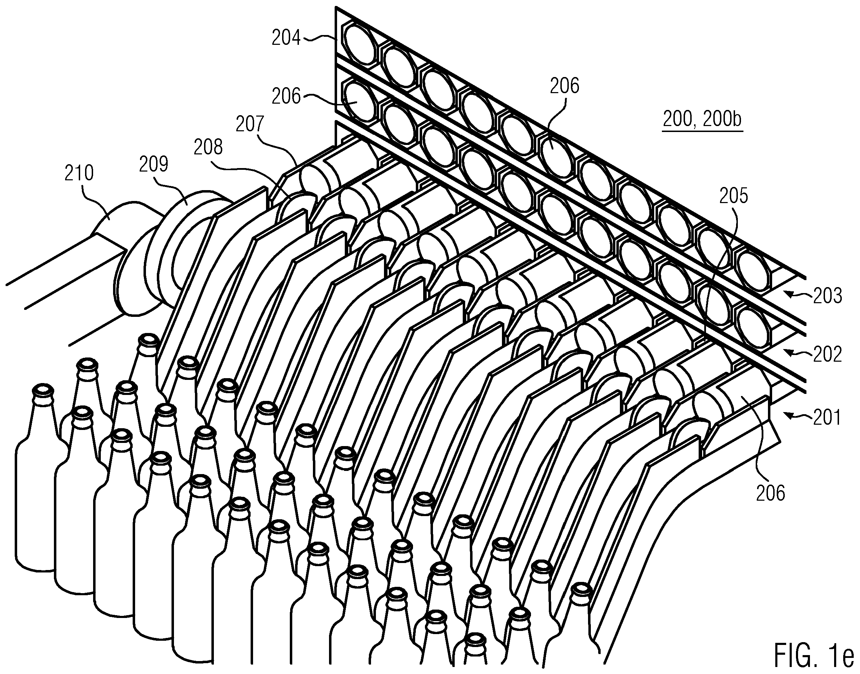

- **Fig. 1e:**: Beispielhafte Vorrichtung zur Zufuhr von Behältern zu Zellen von Behälterreihen eines umlaufenden Transportelementes einer Behälterbehandlungseinheit in einer beispielhaften (zweiten) Momentaufnahme

Die **Fig. 1a** zeigt beispielhaft eine Vorderansicht einer Behälterbehandlungseinheit 113, beispielsweise einer Behälterwaschmaschine, z.B. Flaschenwaschmaschine, welche eine beispielhafte Vorrichtung 100 zur Zufuhr von Behältern zu Zellen 105 von Behälterreihen 103, 104 eines umlaufenden Transportelementes einer Behälterbehandlungseinheit 113, beispielhafter Einschub 115 umfasst.

Der (hier nicht dargestellte) Ausschub, d.h. die Vorrichtung / der Teil der Vorrichtung 100 zur Abnahme von Behältern aus Zellen 105 von Behälterreihen 103, 104 des umlaufenden Transportelementes der Behälterbehandlungseinheit 113 ist analog bzw. identisch zum Einschub ausführbar.

Darüber hinaus sind aus Gründen der Übersichtlichkeit die zu behandelnden Behälter ebenfalls nicht dargestellt.

Beispielhaft dargestellt sind zwei horizontal angeordnete Behälterreihen 103, 104 befestigt an einem endlos umlaufenden Transportelement (nicht dargestellt) einer Behälterbehandlungseinheit 113. Besage beispielhafte Behälterreihen 103, 104 umfassen sogenannte Zellen 105 konfiguriert zur Aufnahme und Transport eines Behälters pro Zelle, wobei beispielsweise der Einschub 115 einen Behälter entlang seiner Behälterlängsachse in eine Zelle einschieben kann.

Erfindungsgemäß weist die Vorrichtung eine Messsensorik auf, beispielhaft umfassend zwei Sensoren 101, 102, welche dazu konfiguriert ist, eine Ausrichtung und/oder Position der Behälterreihen 103, 104 des Transportelementes der Behälterbehandlungseinheit 113 zu messen. Beispielhaft sind die Sensoren 101, 102 sich gegenüberliegend und mit einem Abstand 116 entlang der Breite der Behälterreihen 103, 104 bzw. entlang der Breite der Behälterbehandlungseinheit angeordnet.

Wie oben erwähnt können die Sensoren 103, 104 beispielhaft an einem Rahmen oder einer Halterung der Vorrichtung 100 angeordnet sein, wobei die Messsensorik bzw. die Sensoren 101, 102 entkoppelt sein können von Verstellbewegungen, z.B. Kippbewegungen, der Vorrichtung.

Alternativ oder zusätzlich kann die beispielhafte Messsensorik bzw. können die beispielhaften Sensoren 101, 102 beispielsweise an der Behälterbehandlungseinheit 113 peripher über die Breite 116 der Behälterbehandlungseinheit bzw. über die Breite einer Behälterreihe eines umlaufenden Transportelementes angeordnet sein.

Beispielhaft dargestellt ist eine Messlinie bzw. Sichtlinie 112 zwischen den Sensoren 101, 102 welche eine horizontale Referenzlinie definieren können in Bezug auf die horizontale Ausrichtung und Lage einer diese Messposition bzw. Messlinie bzw. Sichtlinie 112 der Sensoren passierenden Behälterreihe 104.

Die beispielhafte Messsensorik bzw. die beispielhaften Sensoren 101, 102 können unter anderem die Position und/oder den Abstand 111 zwischen zwei benachbarten Behälterreihen 103, 104 messen und/oder die Ausrichtung, insbesondere die horizontale Ausrichtung, der Behälterreihen.

Auf Grundlage der Messungen der Messsensorik bzw. der beispielhaften Sensoren 101, 102 können die Mittel 106, 107, 108 zur Zufuhr und/oder Abfuhr der Behälter verstellt werden, um Abweichungen der Lage der Behälterreihen 103, 104, beispielsweise eine unerwünschte Schrägstellung der Behälterreihen, auszugleichen und so eine optimale Übergabeposition von Vorrichtung 100 zu den Zellen 105 der Behälterreihen der Behälterbehandlungseinheit 113 ermöglichen zu können.

Alternativ oder zusätzlich kann auf Grundlage der Messungen der Messsensorik bzw. der beispielhaften Sensoren 101, 102 zur Ausrichtung und/oder zur Position und vorzugsweise zum Abstand 111 der Behälterreihen 103, 104 eine Änderung der Bewegung der Mittel 106, 107, 108 zur Zufuhr und/oder Abfuhr der Behälter erfolgen.

Die Vorrichtung 100 umfasst dabei Mittel 106, 107, 108 zur Zufuhr und/oder Abfuhr der Behälter die beispielhaft wie folgt ausgeführt sind.

Ein beispielhaftes Führungsprofil bzw. beispielhafte Führungsschienen 107, mit einem beispielhaft gekrümmten Profil auf dem sich ein Behälter hin zu (oder im Fall des Ausschubs weg von) den Zellen 105 der Behälterreihen bewegen kann. Dabei kann das Führungsprofil bzw. können die beispielhaften Führungsschienen 107 einen beispielhaften Spalt 108 aufweisen in den ein beispielhaftes Schiebelement 108 eingreifen kann, wobei das Schieber- bzw. Schiebelement 106 von einem Antriebsmittel (nicht dargestellt) antreibbar ist, um einen Behälter entlang des Führungsprofils bzw. entlang der Führungsschienen 107 bewegen zu können. Beispielsweise können die Schiebeelemente 106 verbunden sein mit einer antreibbaren Drehachse 109 und so eine Bewegung 110 um die Achse 109 ausführen.

Eine Verstellung der Mittel 106, 107, 108 zur Zufuhr und/oder die Mittel zur Abfuhr der Behälter auf Grundlage der von der Messsensorik bzw. den Sensoren 101, 102 gemessenen Ausrichtung und/oder Position der Behälterreihen und vorzugsweise dem Abstand benachbarter Behälterreihen kann eine Verstellung der einzelnen Mittel 106, 107, 108 und/oder eine Verstellung aller Mittel 106, 107, 108 bzw. eine Verstellung der gesamten Vorrichtung 100 umfassen, welche eine Verkippung der Mittel 106, 107, 108 in Bezug auf eine Längsachse 109 der Vorrichtung 100 umfasst.

Beispielsweise ist es denkbar, dass lediglich das Führungsprofil bzw. die Führungsschienen 107 verstellt bzw. verkippt werden, oder dass das Führungsprofil bzw. die Führungsschienen 107 mit den Schiebelemente 106, samt Antriebsmitteln für die Schiebelemente 106 verkippt werden, oder die gesamte Vorrichtung 100 verkippt wird.

Eine Verkippung kann dabei beispielsweise durch eine Höhenverstellung 119 an den Enden bzw. an einem Ende der Vorrichtung 100 erfolgen.

Die Vorrichtung 100 bzw. der Mittel 106, 107, 108 kann/können jedoch auch in alle drei Raumrichtungen, d.h. in allen Achsen des Koordinatensystems 114, verstellbar sein, z.B. durch geeignete Aktorik- bzw. Pneumatik- oder Hydrauliksysteme.

Wie erwähnt kann auf Grundlage der Messungen der Messsensorik bzw. der beispielhaften Sensoren 101, 102 zur Ausrichtung und/oder zur Position und vorzugsweise zum Abstand 111 der Behälterreihen 103, 104 eine Änderung der Bewegung der Mittel 106, 107, 108 zur Zufuhr und/oder Abfuhr der Behälter erfolgen, sodass beispielsweise die Bewegung der Schiebelemente bzw. der Schieberelemente 108 beschleunigt oder verzögert werden kann.

Die **Fig. 1b** zeigt beispielhaft schematisch einen vereinfachten Querschnitt der Vorrichtung 100 aus Fig.1 zur Zufuhr von Behältern zu Zellen von Behälterreihen eines umlaufenden Transportelementes einer Behälterbehandlungseinheit worin die beispielhaften Schiebeelemente bzw. die Schieberelemente 106 zu erkennen sind, welche an ein einer/der antreibbaren Drehachse / Längsachse 109 der Vorrichtung angeordnet sein können, und welche einen Behälter 117 auf einer beispielhaften Trajektorie 120 einer Zelle 105 einer Behälterreihe 103, 104 einer Behälterbehandlungseinheit zuführen kann. Der Behälter 117 kann dabei beispielhaft von einem Förderelement 118 zur Vorrichtung 100 transportiert werden.

Das Führungsprofil bzw. die Führungsschienen 107 sind der Übersicht halber nicht in der Fig. 1b dargestellt.

Die **Fig.1c** zeigt schematisch und stark vereinfacht eine beispielhafte Verstellung, insbesondere eine Verkippung 122 der Vorrichtung 100 aus Fig.1a in Bezug auf eine horizontale Referenzlage 121 der Vorrichtung 100 und über die Breite 116 der Behälterreihe 104 bzw. über die Breite der Behälterbehandlungseinheit 113, so dass beispielsweise die Ausrichtung der Längsachse 109 der Vorrichtung bzw. die Längsachse der Mittel 106, 107, 108 zur Zufuhr der Behälter mit der Ausrichtung der Behälterreihe 104 übereinstimmt, so dass die beispielhafte Schrägstellung der Behälterreihe 104 ausgeglichen werden kann und eine optimale Übergabeposition von den Mitteln zur Zufuhr der Behälter in die Zellen 105 der Behälterreihe 104 gewährleistet werden kann.

Die **Fig.1d** und die **Fig.1e** zeigen beispielhaft zwei Momentaufnahmen 200a, 200b im Betrieb einer beispielhaften Vorrichtung 200 zur Zufuhr von Behältern 206 zu Zellen 205 von Behälterreihen 201, 202, 203 eines umlaufenden Transportelementes einer Behälterbehandlungseinheit 204, d.h. **Fig.1d** und **Fig.1e** zeigen eine beispielhafte Einschubbewegung.

Dabei kann beispielsweise das umlaufenden Transportelement so konfiguriert sein, dass sich im dargestellten Fall die Behälterreihen 201, 202, 203 im Bereich der Übergabe/des Einschubs nach oben (entgegen der Schwerkraftrichtung) bewegen können.

Die Vorrichtung 200 kann analog zur Vorrichtung 100 aus Fig.1 über horizontal angeordnete Behälterreihen 201, 202, 203 verfügen, welche an einem endlos umlaufenden Transportelement bzw. an einer Leiste an einem endlos umlaufenden Transportelement, z.B. einer Transportkette, (nicht dargestellt) einer Behälterbehandlungseinheit 204 angebracht sein können.

Die beispielhaften Behälterreihen 201, 202, 203 umfassen beispielhafte Zellen 205 konfiguriert zur Aufnahme und Transport eines Behälters 206 pro Zelle. In beiden Momentaufnahmen 200a, 200b sind die Zellen der Behälterreihen 202, 203 bereits mit Behältern bzw. Flaschen 206 belegt, d.h. es sind in den Darstellungen die Böden der in die Zellen der Behälterreihen 202, 203 eingeschobenen Behälter 206 zu erkennen.

Die Behälterreihe 201 bzw. die Zellen der Behälterreihe 201 sind in der Momentaufnahme 200a zunächst leer.

Im beispielhaften Betriebsmoment 200a der Vorrichtung 200 ist zu erkennen, wie der Vorrichtung bereitgestellte Behälter 206 durch ein beispielhaftes Führungsprofil 207 geleitet bzw. geführt werden mittels beweglicher beispielhafter Schiebelemente 208 in Richtung auf die leeren Zellen 205 der Behälterreihe 201.

Die beispielhaften Schiebelemente 208, welche beispielsweise in Spalten des Führungsprofils 207 eingreifen können, können beispielsweise mittels einer Antriebswelle oder Kurbel 209, die an ein Antriebsmittel 210, z.B. einen Servoantrieb, gekoppelt sein kann, angetrieben werden. Der beispielhafte in Fig. 1e dargestellte Betriebsmoment 200b zeigt beispielhaft wie die Schiebelemente 208 des Führungsprofils 207 die Behälter in die Zellen der Behälterreihe 201 einschieben.

Analog zur Vorrichtung 100 der Fig.1a und/oder gemäß den oben allgemein beschriebenen Merkmalen und Beispielen weist die Vorrichtung 200 eine Messsensorik (nicht dargestellt) auf zur Messung der Lage, der Ausrichtung und/oder Position der Behälterreihen 201, 202, 203, sowie einschließlich zur Messung der Abstände zwischen den Behälterreihen 201, 202, 203, insbesondere zur Messung der horizontalen Abstände zwischen benachbarten Behälterreihen.

Das beispielhafte Führungsprofil 207 und/oder die beispielhaften Schiebelemente 208 und/oder das beispielhafte Antriebsmittel 210 (z.B. mit Antriebswelle bzw. Kurbel 209) können dabei beispielhaft als Mittel zur Zufuhr der Behälter hinein in Zellen einer Behälterreihe angesehen werden.

Auf Grundlage der Messsensorik kann dann erfindungsgemäß eine Verstellung, z.B. Eine Verkippung, der Mittel zur Zufuhr der Behälter hinein in Zellen einer Behälterreihe einer/der Behälterbehandlungseinheit 204 erfolgen.

Eine Verstellung der Mittel zur Zufuhr und/oder die Mittel zur Abfuhr der Behälter auf Grundlage der von der Messsensorik gemessenen Lage und/oder Ausrichtung und/oder Position der Behälterreihen und vorzugsweise dem Abstand benachbarter Behälterreihen kann eine Verstellung der einzelnen Mittel 207, 208, 209, 210 und/oder eine Verstellung aller Mittel 207, 208, 209, 210 bzw. eine Verstellung der gesamten Vorrichtung 200 umfassen, welche eine Verkippung der Mittel 207, 208, 209, 210 in Bezug auf eine Längsachse der Vorrichtung 200 und/oder eine Verkippung der Längsachse der Vorrichtung 200. umfasst.

Beispielsweise ist es denkbar, dass lediglich das Führungsprofil 207 verstellt bzw. verkippt werden oder dass das Führungsprofil mit den Schiebelemente 208, samt Antriebsmitteln 209, 210 für die Schiebelemente 208 verkippt werden kann, oder die gesamte Vorrichtung 200 verkippt wird.

Eine Verkippung kann dabei beispielsweise durch eine Höhenverstellung an den Enden bzw. an einem Ende der Vorrichtung 200 erfolgen.

Die Vorrichtung 200 bzw. der Mittel 207, 208, 209, 210 kann/können jedoch auch in alle drei Raumrichtungen verstellbar sein, z.B. durch geeignete Aktorik- bzw. Pneumatik- oder Hydrauliksysteme.

Beispielsweise kann unter einer Verstellung oder Verkippung des Führungsprofils 207 dabei insbesondere eine Verstellung bzw. Verkippung des gesamten Führungsprofils 207 entlang der gesamten Breite einer Behälterbehandlungseinheit, d.h. entlang der Breite bzw. Länge einer Behälterreihe, verstanden werden, beispielsweise eine Verkippung um bis zu 15 mm oder mehr über die Breite bzw. Länge einer Behälterreihe.

Darüber hinaus kann auf Grundlage der Messungen der Messsensorik zur Lage und/oder Ausrichtung und/oder zur Position und vorzugsweise zum Abstand der Behälterreihen 201, 202, 203 eine Änderung der Bewegung der Mittel 207, 208, 209, 210 zur Zufuhr und/oder Abfuhr der Behälter erfolgen, sodass beispielsweise die Bewegung der Schiebelemente bzw. der Schieberelemente 208 beschleunigt oder verzögert werden kann.

Die Bezugszeichen sind dabei wie folgt belegt.
- **100**: Beispielhafte Vorrichtung zur Zufuhr von Behältem zu Zellen von Behälterreihen eines umlaufenden Transportelementes einer Behälterbehandlungseinheit, beispielhafter Einschub
- **101**: Beispielhafter (erster) Sensor eine beispielhaften Messsensorik
- **102**: Beispielhafter (zweiter) Sensor eine beispielhaften Messsensorik
- **103**: Beispielhafte (erste) Reihe von Zellen einer Behälterreihe / beispielhafte Behälterreihe
- **104**: Beispielhafte (zweite) Reihe von Zellen einer Behälterreihe / beispielhafte Behälterreihe
- **105**: Beispielhafte Zelle einer Behälterreihe
- **106**: Beispielhafte angetriebenes/antreibbares Schieberelement / Schiebeelement oder Schaufelelement
- **107**: Beispielhaftes Führungsprofil / beispielhafte Führungsschiene
- **108**: Beispielhafte Öffnung / beispielhafter Spalt eines Führungsprofiles / einer Führungsschiene
- **109**: Beispielhafte Längsachse der Vorrichtung / des Einschubs / beispielhafte Drehachse
- **110**: Beispielhafte mögliche Bewegung der angetriebenen/antreibbaren Schieberelemente oder Schaufelelemente
- **111**: Beispielhafter Abstand zwischen zwei Behälterreihen
- **112**: Beispielhafte horizontale Referenzlinie / Luftlinie / Sichtlinie/ Messlinie / Abstand zwischen den beispielhaften Sensoren
- **113**: Beispielhafte Behälterbehandlungseinheit
- **114**: Beispielhaftes orthogonales Koordinatensystem mit Achsen, x, y z
- **115**: Beispielhafter Einschub
- **116**: Beispielhafter Abstand zwischen Sensoren / Beispielhafte Breite der Behälterbehandlungseinheit / Breite der Behälterreihe
- **117**: Beispielhafter Behälter
- **118**: Beispielhaftes Förderelement, beispielhaftes Förderband
- **119**: Beispielhafte Höhenverstellbarkeit
- **120**: Beispielhafte Bewegungsbahn / Trajektorie, auf der Behälter einer Zelle zugeführt werden können
- **121**: Beispielhafte Ausgangslage / beispielhafte horizontale Referenzlage
- **122**: Beispielhafte Verkippung der Vorrichtung bzw. der Mittel der Vorrichtung
- **200**: Beispielhafte Vorrichtung zur Zufuhr von Behältern zu Zellen von Behälterreihen eines umlaufenden Transportelementes einer Behälterbehandlungseinheit
- **200a**: Beispielhafte Vorrichtung zur Zufuhr von Behältern zu Zellen von Behälterreihen eines umlaufenden Transportelementes einer Behälterbehandlungseinheit, beispielhafter Einschub, in einer beispielhaften ersten Momentaufnahme
- **200b**: Beispielhafte Vorrichtung zur Zufuhr von Behältern zu Zellen von Behälterreihen eines umlaufenden Transportelementes einer Behälterbehandlungseinheit, beispielhafter Einschub, in einer beispielhaften zweiten Momentaufnahme
- **201**: Beispielhafte (erste) Reihe von Zellen einer Behälterreihe / beispielhafte Behälterreihe, beispielhaft mit leeren Zellen
- **202**: Beispielhafte (zweite) Reihe von Zellen einer Behälterreihe / beispielhafte Behälterreihe, beispielhaft befüllt mit Behältern/Flaschen
- **203**: Beispielhafte (dritte) Reihe von Zellen einer Behälterreihe / beispielhafte Behälterreihe, beispielhaft befüllt mit Behältern/Flaschen
- **204**: Beispielhafte Behälterbehandlungseinheit
- **205**: Beispielhafte Zelle einer Behälterreihe
- **206**: Beispielhafter Behälter / beispielhafte Flasche
- **207**: Beispielhaftes Führungsprofil
- **208**: Beispielhaftes angetriebenes/antreibbares Schieberelement / Schiebeelement oder Schaufelelement
- **209**: Beispielhafte Längsachse der Vorrichtung / des Einschubs / beispielhafte Drehachse / beispielhafte Antriebswelle / beispielhafte Kurbel
- **210**: Beispielhaftes Antriebsmittel zum Antrieb der beispielhaften Schieberelemente / Schiebeelemente

## Patentansprüche

1. Behälterbehandlungseinheit (113) mit einem umlaufenden Transportelement mit Zellen (105) aufweisenden Behälterreihen (103, 104) und mit einer Vorrichtung (100) zur Zufuhr von Behältern (117) zu Zellen (105) von Behälterreihen (103, 104) des umlaufenden Transportelementes und/oder zur Abnahme von Behältern (117) aus Zellen (105) von Behälterreihen (103, 104) des umlaufenden Transportelementes, wobei die Vorrichtung (100) Mittel (106, 107, 108) zur Zufuhr von Behältern (117) zu Zellen (105) von Behälterreihen (103, 104) der Behälterbehandlungseinheit (113) und/oder Mittel (106, 107, 108) zur Abnahme von Behältern (117) aus Zellen (105) von Behälterreihen (103, 104) der Behälterbehandlungseinheit (813) umfasst,
**dadurch gekennzeichnet, dass**
die Vorrichtung (100) eine Messsensorik (101, 102) aufweist, wobei die Messsensorik (101, 102) dazu konfiguriert ist, eine Ausrichtung und/oder Position der Behälterreihen (103, 104) des Transportelementes der Behälterbehandlungseinheit (113) zu messen, und
die Mittel (106, 107, 108) zur Zufuhr und/oder die Mittel (106, 107, 108) zur Abfuhr der Behälter (117) verstellbar sind und wobei die Verstellung der Mittel (106, 107, 108) zur Zufuhr und/oder Abfuhr der Behälter auf Grundlage der von der Messsensorik (101, 102) gemessenen Ausrichtung und/oder Position der Behälterreihen (103, 104) des Transportelementes erfolgt, und wobei die Vorrichtung dazu konfiguriert ist, eine Verstellung der Mittel (106, 107, 108) zur Zufuhr und/oder Abfuhr der Behälter auf Grundlage der von der Messsensorik (101, 102) gemessenen Ausrichtung und/oder Position der Behälterreihen (103, 104) des Transportelementes durchzuführen, welche eine Verkippung der Mittel (106, 107, 108) in Bezug auf eine Längsachse (109) der Vorrichtung (100) umfasst.

2. Behälterbehandlungseinheit (113) nach Anspruch 1, worin die Behälterbehandlungseinheit (113) als Behälterwaschmaschine ausgeführt ist.

3. Behälterbehandlungseinheit (113) nach Anspruch 1 oder 2, wobei die Vorrichtung (100) ferner eine Aktorik, z.B. wenigstens zwei Linearaktuatoren, umfasst, wobei die Aktorik dazu konfiguriert ist, die Ausrichtung der Mittel (106, 107, 108) zur Zufuhr und/oder Abfuhr der Behälter (117) auf Grundlage der von der Messsensorik (101, 102) gemessenen Ausrichtung und/oder Position der Behälterreihen (103, 104) des Transportelementes zu verstellen.

4. Behälterbehandlungseinheit (113) nach einem der vorherigen Ansprüche, wobei die Messsensorik (101, 102) dazu konfiguriert ist, die horizontale Ausrichtung der Behälterreihen (103, 104) des Transportelementes der Behälterbehandlungseinheit (113) zu messen und/oder einen Abstand (111) zwischen Behälterreihen (103, 104) des Transportelementes zu bestimmen.

5. Behälterbehandlungseinheit (113) nach einem der vorherigen Ansprüche, wobei die Messsensorik (101, 102) wenigstens zwei Sensoren umfasst, welche an oder bei sich gegenüberliegenden Enden einer Behälterreihe (103, 104) eines umlaufenden Transportelementes angeordnet sind.

6. Behälterbehandlungseinheit (113) nach einem der vorherigen Ansprüche, wobei die Messsensorik (101, 102) einen oder mehrere Sensoren folgender Bauart umfasst: optischer, mechanischer, elektrischer oder opto-elektrischer Sensor.

7. Behälterbehandlungseinheit (113) nach einem der vorherigen Ansprüche, wobei die Mittel (106, 107, 108) zur Zufuhr und/oder die Mittel (106, 107, 108) zur Abfuhr der Behälter ein bewegliches und verstellbares Führungsprofil (107) zur Führung und zum Transport der Behälter (117) umfassen.

8. Behälterbehandlungseinheit (113) nach dem vorherigen Anspruch, wobei die Vorrichtung dazu konfiguriert ist, die Ausrichtung des Führungsprofils (107) zur Führung und zum Transport der Behälter (117) auf Grundlage der von der Messsensorik (101, 102) gemessenen Ausrichtung der Behälterreihen (103, 104) des Transportelementes zu verstellen, wobei das Verstellen beispielsweise ein Verkippen umfasst.

9. Behälterbehandlungseinheit (113) nach einem der vorherigen Ansprüche, wobei die Vorrichtung dazu konfiguriert ist, Bewegungen der Mittel (106, 107, 108) zur Zufuhr und/oder Abfuhr der Behälter auf Grundlage der von der Messsensorik (101, 102) gemessenen Ausrichtung und/oder Position der Behälterreihen (103, 104) des Transportelementes zu beschleunigen und/oder zu verzögern.

10. Behälterbehandlungseinheit (113) nach einem der vorherigen Ansprüche ferner umfassend getrennte Antriebsysteme für Zufuhr, Abnahme und Transport der Behälter (117), sowie wenigstens eine überlagerte Steuerung zur Steuerung der Antriebsysteme und zur Betriebsablaufsteuerung und Synchronizitätsüberwachung der Behälterbehandlungseinheit (113).

11. Verfahren zur Zufuhr von Behältern (117) zu Zellen (105) von Behälterreihen (103, 104) eines umlaufenden Transportelementes und/oder zur Abnahme von Behältern (117) aus Zellen (105) von Behälterreihen (103, 104) des/eines umlaufenden Transportelementes in einer Behälterbehandlungseinheit (113) nach einem der vorherigen Ansprüche umfassend:
eine Messung einer Ausrichtung und/oder Position der Behälterreihen (103, 104) des Transportelementes der Behälterbehandlungseinheit (113) mittels einer Messsensorik (101, 102),
eine Verstellung der Mittel (106, 107, 108) zur Zufuhr und/oder Abfuhr der Behälter (117) auf Grundlage der von der Messsensorik (101, 102) gemessenen Ausrichtung und/oder Position der Behälterreihen (103, 104) des Transportelementes, wobei die Verstellung der Mittel (106, 107, 108) zur Zufuhr und/oder Abfuhr der Behälter auf Grundlage der von der Messsensorik (101, 102) gemessenen Ausrichtung und/oder Position der Behälterreihen (103, 104) des Transportelementes erfolgt und eine Verkippung der Mittel (106, 107, 108) in Bezug auf eine Längsachse (109) der Vorrichtung (100) umfasst.

12. Verfahren nach dem vorherigen Anspruch, wobei die Behälterbehandlungseinheit (113) als Behälterwaschmaschine ausgeführt ist.

## Claims

1. Container handling unit (113) with a circulating transport element with rows of containers (103, 104) having cells (105) and with a device (100) for feeding containers (117) to cells (105) of rows of containers (103, 104) of the circulating transport element and/or for removing containers (117) from cells (105) of container rows (103, 104) of the circulating transport element, wherein the device (100) comprises means (106, 107, 108) for supplying containers (117) to cells (105) of container rows (103, 104) of the container handling unit (113) and/or means (106, 107, 108) for removing containers (117) from cells (105) of container rows (103, 104) of the container handling unit (113),
**characterized in that**
the device (100) has a measuring sensor system (101, 102), wherein the measuring sensor system (101, 102) is configured to measure an alignment and/or position of the container rows (103, 104) of the transport element of the container handling unit (113), and
the means (106, 107, 108) for supplying and/or removing the containers (117) are adjustable, and wherein the adjustment of the means (106, 107, 108) for supplying and/or removing the containers is based on the alignment and/or position of the container rows (103, 104) of the transport element measured by the measuring sensor (101, 102), and wherein the device is configured to adjust the means (106, 107, 108) for supplying and/or removing the containers on the basis of the alignment and/or position of the container rows (103, 104) of the transport element measured by the measuring sensor (101, 102), which comprises tilting the means (106, 107, 108) with respect to a longitudinal axis (109) of the device (100).

2. Container handling unit (113) according to claim 1, wherein the container handling unit (113) is designed as a container washing machine.

3. Container handling unit (113) according to claim 1 or 2, wherein the device (100) further comprises an actuator, e.g. at least two linear actuators, wherein the actuator is configured to adjust the alignment of the means (106, 107, 108) for supplying and/or removing the containers (117) on the basis of the alignment and/or position of the container rows (103, 104) of the transport element measured by the measuring sensor (101, 102).

4. Container handling unit (113) according to one of the previous claims, wherein the measuring sensor system (101, 102) is configured to measure the horizontal alignment of the container rows (103, 104) of the transport element of the container handling unit (113) and/or determine a distance (111) between container rows (103, 104) of the transport element.

5. Container handling unit (113) according to one of the previous claims, wherein the measuring sensor system (101, 102) comprises at least two sensors which are arranged at or near opposite ends of a container row (103, 104) of a circulating transport element.

6. Container handling unit (113) according to one of the previous claims, wherein the measuring sensor system (101, 102) comprises one or more sensors of the following design: optical, mechanical, electrical or opto-electrical sensor.

7. Container handling unit (113) according to one of the previous claims, wherein the means (106, 107, 108) for supplying and/or the means (106, 107, 108) for removing the containers comprise a movable and adjustable guide profile (107) for guiding and transporting the containers (117).

8. Container handling unit (113) according to the previous claim, wherein the device is configured to adjusting the alignment of the guide profile (107) for guiding and transporting the containers (117) based on the alignment of the container rows (103, 104) of the transport element measured by the measuring sensors (101, 102), wherein the adjustment comprises, for example, tilting.

9. Container handling unit (113) according to one of the previous claims, wherein the device is configured to accelerate and/or decelerate movements of the means (106, 107, 108) for feeding and/or removing the containers based on the alignment and/or position of the container rows (103, 104) of the transport element measured by the measuring sensors (101, 102).

10. Container handling unit (113) according to one of the previous claims, further comprising separate drive systems for feeding, removing and transporting the containers (117), as well as at least one superimposed control system for controlling the drive systems and for controlling the operating sequence and monitoring the synchronization of the container handling unit (113).

11. Method for feeding containers (117) to cells (105) of container rows (103, 104) of a circulating transport element and/or for removing containers (117) from cells (105) of container rows (103, 104) of the circulating transport element in a container handling unit (113) according to one of the previous claims, comprising: measuring an alignment and/or position of the container rows (103, 104) of the transport element (10) of the container handling unit (113) according to one of the previous claims, comprising: measuring an alignment and/or position of the container rows (103, 104) of the transport element (10) of the container handling unit (113) according to one of the previous claims, comprising: measuring an alignment and/or position of the container rows (10container handling unit (113) according to one of the previous claims, comprising:
a measurement of an alignment and/or position of the container rows (103, 104) of the transport element of the container handling unit (113) by means of a measuring sensor system (101, 102),
adjusting the means (106, 107, 108) for supplying and/or removing the containers (117) on the basis of the alignment and/or position of the container rows (103, 104) of the transport element measured by the measuring sensor system (101, 102), wherein the adjustment of the means (106, 107, 108) for supplying and/or removing the containers is based on the alignment and/or position of the container rows (103, 104) of the transport element measured by the measuring sensor system (101, 102) and comprises a tilting of the means (106, 107, 108) with respect to a longitudinal axis (109) of the device (100).

12. Method according to the previous claim, wherein the container handling unit (113) is designed as a container washing machine.

## Revendications

1. Unité de traitement de récipients (113) comprenant un élément de transport circulaire comprenant des rangées de récipients (103, 104) présentant des cellules (105), et comprenant un dispositif (100) permettant d'alimenter des récipients (117) vers des cellules (105) de rangées de récipients (103, 104) de l'élément de transport circulaire (113) et/ou permettant de prélever des récipients (117) à partir de cellules (105) de rangées de récipients (103, 104) de l'élément de transport circulaire,
dans lequel le dispositif (100) comprend des moyens (106, 107, 108) permettant d'alimenter des récipients (117) vers des cellules (105) de rangées de récipients (103, 104) de l'unité de traitement de récipients (113) et/ou des moyens (106, 107, 108) permettant de prélever des récipients (117) à partir de cellules (105) de rangées de récipients (103, 104) de l'unité de traitement de récipients (813),
**caractérisé en ce que**
le dispositif (100) présente un système de capteurs de mesure (101, 102), dans laquelle le système de capteurs de mesure (101, 102) est configuré pour mesurer une orientation et/ou une position des rangées de récipients (103, 104) de l'élément de transport de l'unité de traitement de récipients (113), et
les moyens (106, 107, 108) permettant d'alimenter et/ou les moyens (106, 107, 108) permettant d'évacuer les récipients (117) sont réglables, dans laquelle le réglage des moyens (106, 107, 108) permettant d'alimenter et/ou d'évacuer les récipients intervient en se basant sur l'orientation et/ou la position des rangées de récipients (103, 104) de l'élément de transport mesurée(s) par le système de capteurs de mesure (101, 102), et dans laquelle le dispositif est configuré pour mettre en œuvre un réglage des moyens (106, 107, 108) permettant d'alimenter et/ou d'évacuer les récipients en se basant sur l'orientation et/ou la position des rangées de récipients (103, 104) de l'élément de transport mesurée(s) par le système de capteurs de mesure (101, 102), ledit réglage comprenant un basculement des moyens (106, 107, 108) par rapport à un axe longitudinal (109) du dispositif (100).

2. Unité de traitement de récipients (113) selon la revendication 1, dans laquelle l'unité de traitement de récipients (113) est réalisée sous la forme d'une machine à laver les récipients.

3. Unité de traitement de récipients (113) selon la revendication 1 ou 2, dans laquelle le dispositif (100) comprend en outre un système d'actionnement, par exemple au moins deux actionneurs linéaires, dans laquelle le système d'actionnement est configuré pour régler l'orientation des moyens (106, 107, 108) permettant d'alimenter et/ou d'évacuer les récipients (117) en se basant sur l'orientation et/ou la position des rangées de récipients (103, 104) de l'élément de transport mesurée(s) par le système de capteurs de mesure (101, 102).

4. Unité de traitement de récipients (113) selon l'une quelconque des revendications précédentes, dans laquelle le système de capteurs de mesure (101, 102) est configuré pour mesurer l'orientation horizontale des rangées de récipients (103, 104) de l'élément de transport de l'unité de traitement de récipient (113) et/ou pour déterminer une distance (111) entre des rangées de récipients (103, 104) de l'élément de transport.

5. Unité de traitement de récipients (113) selon l'une quelconque des revendications précédentes, dans laquelle le système de capteurs de mesure (101, 102) comprend au moins deux capteurs qui sont agencés au niveau de ou à côté d'extrémités opposées d'une rangée de récipients (103, 104) d'un élément de transport circulaire.

6. Unité de traitement de récipients (113) selon l'une quelconque des revendications précédentes, dans laquelle le système de capteurs de mesure (101, 102) comprend un ou plusieurs capteur(s) du type ci-après : capteur optique, mécanique, électrique ou opto-électrique.

7. Unité de traitement de récipients (113) selon l'une quelconque des revendications précédentes, dans laquelle les moyens (106, 107, 108) permettant d'alimenter et/ou les moyens (106, 107, 108) permettant d'évacuer les récipients comprennent un profil de guidage (107) mobile et réglable permettant de guider et de transporter les récipients (117).

8. Unité de traitement de récipients (113) selon la revendication précédente, dans laquelle le dispositif est configuré pour régler l'orientation du profil de guidage (107) permettant de guider et de transporter les récipients (117) en se basant sur l'orientation des rangées de récipients (103, 104) de l'élément de transport mesurée par le système de capteur de mesure (101, 102), dans laquelle le réglage comprend par exemple un basculement.

9. Unité de traitement de récipients (113) selon l'une quelconque des revendications précédentes, dans laquelle le dispositif est configuré pour accélérer et/ou retarder des mouvements des moyens (106, 107, 108) permettant d'alimenter et/ou d'évacuer les récipients en fonction de l'orientation et/ou de la position des rangées de récipients (103, 104) de l'élément de transport mesurée(s) par le système de capteurs de mesure (101, 102).

10. Unité de traitement de récipients (113) selon l'une quelconque des revendications précédentes, comprenant en outre des systèmes d'entraînement séparés destinés à l'alimentation, au prélèvement et au transport des récipients (117), et au moins un dispositif de commande dominant permettant de commander les systèmes d'entraînement et permettant de commander le déroulement du fonctionnement et de surveiller la synchronisation de l'unité de traitement de récipients (113).

11. Procédé d'alimentation de récipients (117) vers des cellules (105) de rangées de récipients (103, 104) d'un élément de transport circulaire et/ou de prélèvement de récipients (117) à partir de cellules (105) de rangées de récipients (103, 104) de l'élément de transport circulaire au sein d'une unité de traitement de récipients (113) selon l'une quelconque des revendications précédentes, comprenant les étapes consistant à :
mesurer l'orientation et/ou la position des rangées de récipients (103, 104) de l'élément de transport de l'unité de traitement de récipients (113) au moyen d'un système de capteurs de mesure (101, 102),
régler des moyens (106, 107, 108) permettant d'alimenter et/ou d'évacuer les récipients (117) en se basant sur l'orientation et/ou la position des rangées de récipients (103, 104) de l'élément de transport mesurée(s) par le système de capteurs de mesure (101, 102), dans lequel le réglage des moyens (106, 107, 108) permettant d'alimenter et/ou d'évacuer les récipients intervient en se basant sur l'orientation et/ou la position des rangées de récipients (103, 104) de l'élément de transport mesurée(s) par le système de capteurs de mesure (101, 102) et comprend un basculement des moyens (106, 107, 108) par rapport à un axe longitudinal (109) du dispositif (100).

12. Procédé selon la revendication précédente, dans lequel l'unité de traitement de récipients (113) est réalisée sous la forme d'une machine à laver les récipients.
